# EUROPEAN PATENT APPLICATION

(11) **EP 2 574 415 A1**
(43) Date of publication of application: **03.04.2013**
(21) Application number: 11250824.7
(22) Date of filing: 27.09.2011
(51) Int. Cl.: B23B 51/02, B23B 51/08, H02G 1/08

(54) **Fishing adapter**

(71) Applicant: Maltby, Malory, Poitou-Charentes 79160 (FR)
(72) Inventor: Maltby, Malory, Poitou-Charentes 79160 (FR)
(74) Representative: Whitaker, Iain Mark

(57) **Abstract**

Fishing adapters (2;4) for pulling a cable or the like through a hole drilled in a wall or other structure comprising a drill bit connector (2b;4b) to enable the adapter (2;4) to be demountably attached to a drill bit (1) and an item connector (2c;3;4a) to enable a cable or other elongate/ linear item to be attached to the adapter (2;4), wherein the adapter (2;4) further has a rotary coupling (2d;4d) between the drill bit connector (2b;4b) and the item connector (2c;3;4a) to permit the drill bit (1) to rotate as the adapter (2;4) with cable or other elongate/ linear item attached is pulled through a drilled hole without significantly twisting said cable or other elongate/ linear item.

## Description

### Field of the Invention

The present invention concerns a fishing adapter, also known as a 'wire fishing adapter', being a device to connect a length of an item such as wire or cable (or in our case also pipe/ conduit or other elongate/ linear items) to a drill bit that has penetrated through a wall or other structure for pulling (a.k.a. 'fishing') the item back through the wall/ structure when retracting the drill bit. In most cases the elongate/ linear items to be 'fished' are, like wire and cable, not rigidly rectilinear but liable to bend and, therefore, difficult to push through a wall or other solid/ semisolid structure and thus need to be pulled through.

### Background to the Invention

Fishing adapters of the type in question are used by workmen passing flexible electrical wire or cables through masonry, concrete or timber walls or through other solid or semi-solid structures/ media. Fishing adapters are designed to help to reduce the time needed to install the wire or cables. Although such devices are known as fishing adapters, for the avoidance of doubt it should be understood that they are not generally used to randomly angle for items to hook onto. Instead the item to be pulled through the wall is deliberately placed on the hook when the hook projects through the wall.

By way of example, when installing cable from a satellite TV dish or TV aerial that is mounted to the outside of an external brick wall of a building it is necessary to pass the cable through a passageway that is drilled through the brick wall in order to reach the internal socket or to run the cable to the indoors receiver box or TV. A 300mm or 400mm long masonry drill bit or longer is required to penetrate fully through the thickness of most masonry walls and especially cavity walls and the drill bit should be of the type that is normally designed to vibrate as little as possible during hole creation, be as resistant as possible to snagging and be able to transport mortar or brick dust back out of the hole while remaining sharp while drilling into the brick or mortar. For the purposes of the present invention, however, the vibration-damping qualities of the drill bit are not particularly relevant. When the drill bit is being withdrawn, even if rotating under power and with hammer action selected, there is generally no vibration of the drill bit since the percussion hammer does not contact the drill bit.

Once the drill bit has penetrated to the far side of the wall, traditionally it would be withdrawn and a 'fishing tape' (or steel wire with a loop at the end) would be fed through the hole to the far side and the cable end attached to it to pull the cable on the fishing tape back through the hole. This is effective but inevitably somewhat time-consuming. More recently time-saving proposals have been made to modify the drill bit to have a notch to be able to hook the cable to the drill bit so that the cable can be pulled through the hole by the drill as the drill is retracted. This avoids the need to separately guide a 'fishing tape' through the hole first and can save valuable minutes of expensive work-man time. An example such modified drill bit arrangement is disclosed in UK Patent GB 2301788B and is useful but due to the location of the notch on the drill bit can weaken the drill bit tip and is also not fully secure and makes secure attachment of the cable difficult . A variant of the idea of using the drill bit itself as the fishing tool is, as exemplified in US patent US 4033703, to provide a fishing adapter that holds the cable end and mounts by a latch mechanism to the drill bit and thus couples the cable to the drill bit for pulling the cable through the hole.

Despite advances in masonry drill bit design and coatings, snagging can still be a significant problem and notably when seeking to retract the drill bit after the cable passage hole has been formed. When a rotating drill bit passes through certain materials, including porous materials such as soft brick and stone used in the construction of buildings, dust and hard particles of debris are created. This effect is amplified if a drill with a percussion facility is employed. This debris often binds in the flutes around the drill bit. Often it is necessary to run the drill in forward or reverse rotation in order to be able to release it from brick and mortar dust and debris in the passageway to be able to retract the drill. This is straightforward to do when the drill is being retracted on its own but not straightforward if the cable is coupled to the drill bit.

In the cases where the cable is hooked directly onto a modified drill bit or via an intermediate fishing adapter that is latched to the drill bit there is often no opportunity to run the drill since this will risk serious damage and entanglement of the cable. Thus with the existing modified drill bit arrangement and fishing adapter arrangement the workman has no option but to repeatedly insert and retract the running drill to clear all debris before seeking to attach the cable to the bit. The hoped for time-savings of the modified drill bit arrangement and fishing adapter arrangement are thus often lost in practice. Furthermore, for some types of walls and constructions such as those with loose rubble in-filled cavities any amount of preparative clearing of the hole/ passageway before trying to couple the cable to the drill bit may be fruitless and necessitate the workman resorting to using the traditional fishing tape approach instead. Modern cavity walls filled with insulation material in the cavity can present a similar problem when trying to use the traditional fishing devices.

It is an object of the present invention to address these short-comings of the prior art in order to provide a fishing adapter arrangement that is practical for use in a wide range of situations, including rubble in-filled walls and similar, and which avoids the need for preparative clearing of the hole/ passageway.

### Summary of the Invention

In accordance with a first aspect of the present invention there is provided a fishing adapter that comprises a drill bit connector that is demountably attached to a drill bit in use and an item connector to enable a cable or other elongate/ linear item to be attached to the adapter, wherein the adapter has a rotary coupling between the drill bit connector and the item connector to permit the drill bit to rotate as the adapter with cable or other elongate/ linear item attached is pulled through a drilled hole without significantly twisting said cable or other elongate/ linear item. The fishing adapter may comprise a tubular body having the drill bit connector anchored therein and projecting therefrom at one end of the body and the item connector at the other end and with the rotary coupling therebetween, the drill bit connector particularly preferably comprising a hook that engages in use with a notch or hole in the drill bit, the notch or hole being proximate the tip end of the drill bit.

Preferably the rotary coupling has a bearing surface of nylon or other robust low friction or self-lubricating material.

Preferably the drill bit has a through hole in the drill bit that is elliptical, rectangular or otherwise elongate in the axial direction of the drill bit. By this means a hook on the adapter may be easily and reliably secured to the drill bit by insertion into the hole from one side and turning the hook until the stem/ shank of the hook is substantially oriented in the axial direction of the drill bit.

The drill bit connector preferably has an anchoring means comprising a bead or broadened tail end of the drill bit connector that serves to anchor the drill bit connector in the fishing adapter body. This suitably has a rounded surface to engage the bearing surface of the fishing adapter body. Where the bearing surface is of nylon or other robust low friction or self-lubricating material and the drill bit connector comprises a length of wire the anchoring means might simply be a loop of the wire or flattened and spread part of the wire. This latter arrangement simplifies the manufacture of the device.

In a further aspect of the invention there is provided a drill bit having a through hole proximate the tip end of the drill bit, wherein the hole in the drill bit is elliptical, rectangular or otherwise elongate in the axial direction of the drill bit whereby a hook on a fishing adapter such as of the first aspect of the invention may be easily and reliably secured to the drill bit.

In a further aspect of the invention there is provided a fishing adapter that comprises a drill bit connector to enable the adapter to be demountably attached to a drill bit and an item connector to enable a cable or other elongate/ linear item to be attached to the adapter, wherein the drill bit connector comprises a hook that is formed in situ from a wire element that is anchored in the fishing adapter body and bent into shape by a jig assembly.

In a yet further aspect of the invention there is provided a fishing adapter that comprises a drill bit connector to enable the adapter to be demountably attached to a drill bit and an item connector to enable a cable or other elongate/ linear item to be attached to the adapter, wherein the body is adapted to grip a pipe or conduit by splaying when prised apart by a wedge that is pulled by the hook.

### Brief Description of the Drawings

A preferred embodiment of the present invention will now be described below by way of example only with reference to the accompanying drawings, in which:
**Figure 1** is a perspective view of a drilling tip of a drill bit modified for use with a hooked wire or with the hook of the fishing adapter of the present invention;
**Figure 2** is a schematic longitudinal sectional view of a fishing adapter of the present invention, having a hook as the drill bit connector at one end and having a threaded socket as the item connector at the other end;
**Figure 3** is a perspective view of the fishing adapter and with a cable end fitted in the item connector socket;
**Figure 4** is a part perspective part cutaway/ sectional view of the fishing adapter similar to Figure 3 but further showing the hook as the drill bit connector being hooked to the drill bit of Figure 1 as in use, just prior to drawing the drill bit back through the hole in the wall;

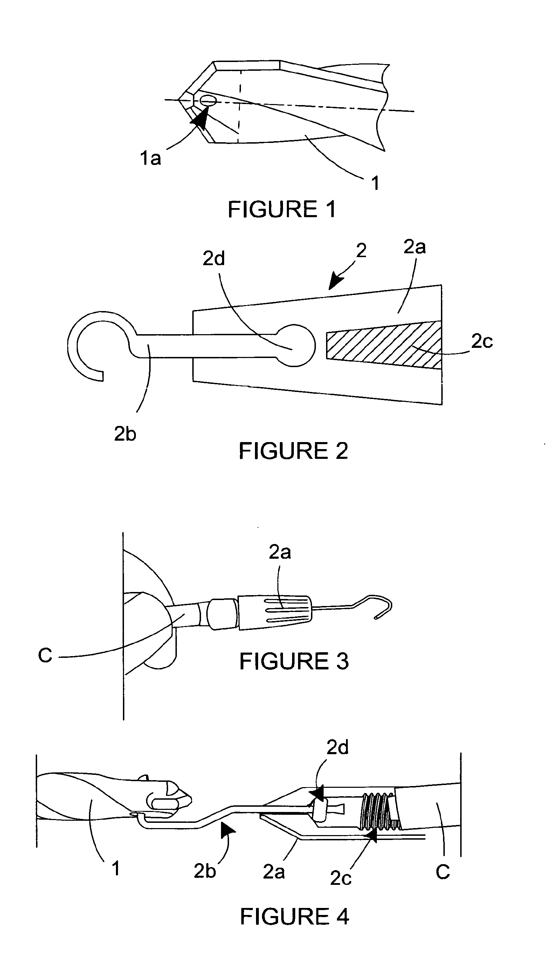

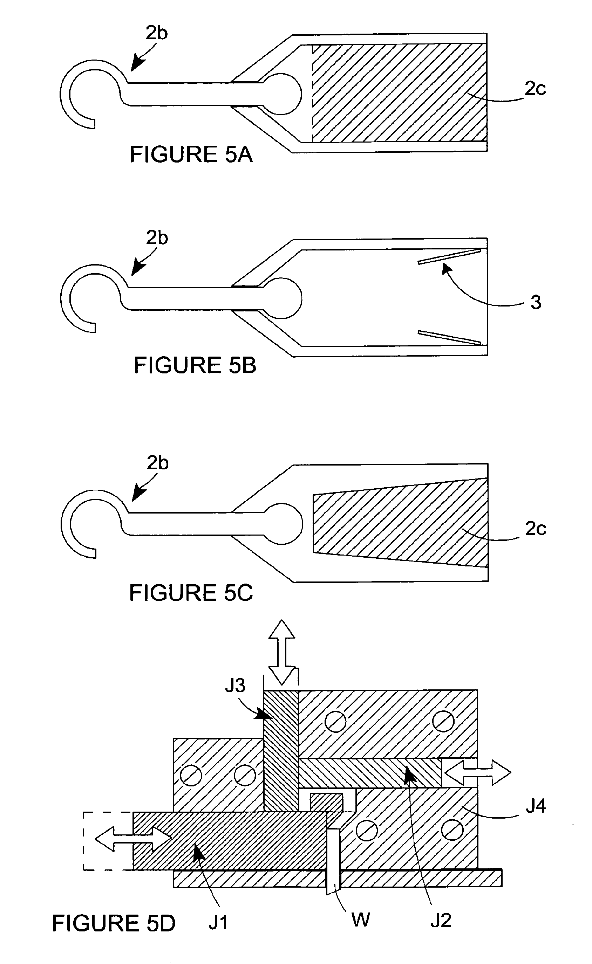

**Figures 5A, 5B and 5C** are schematic longitudinal sectional views of three further variants of the fishing adapter, the first in **Figure 5A** having a broad non-tapered threaded socket as the item connector, the second in **Figure 5B** having a broad non-tapered non-threaded socket with a resilient catch to permanently grip the cable or other item, while the third variant in **Figure 5C** has a tapered threaded socket similar to the one in Figure 2 but at its external surface is tapered only at the first end with the hook but otherwise is circular cylindrical for the majority of its length;
**Figure 6** is a schematic sectional view through a jig assembly suitable for forming a hook on wire in the fishing adapter once the wire for the hook has been anchored in the adapter body;
**Figures 7A** and **7B** are schematic longitudinal sectional views of a variant of the fishing adapter that is adapted to connect piping or other hollow conduit and where the body has a form that is adapted to splay in the manner of a cavity anchor or rawl-plug to lock the body in the bore of the piping/ conduit, as shown in Figure 7B;
**Figure 8A** is a part perspective part cutaway/ sectional view of the fishing adapter similar to Figure 4 showing use of variant of the hook that has a terminal bend to cause the distal tip of the hook to project at right angles to the - this figure also showing the use of a tapered threaded tubular socket to engage a rounded wire cable;
**Figure 8B** is a side elevation view of the variant of the hook showing the major part of the hook lying in a common plane but with an upwardly bent distal end to the hook; and
**Figure 9** is a side elevation view of a variant of the adapter body having a pair of opposing jaws with open sides to enable a flat cable to be slid sideways thereinto and gripped.

### Description of the Preferred Embodiment

Referring to Figure 1, this illustrates a drill bit 1 modified to have a hole 1a in the end of the drill bit 1 close to the cutting tip and orthogonal to the longitudinal axis of the bit 1. The hole 1a is elliptical/ elongate in the axial direction of the drill bit 1 as can be seen. This enables a hook to be inserted though the hole 1 a, by insertion into the hole 1 a from one side and turning the hook until the stem/ shank of the hook is substantially oriented in the axial direction of the drill bit 1 to be secure in place for pulling behind the drill bit 1 as the drill bit 1 is retracted back through a hole drilled through a wall.

The drill bit 1 may be formed with the hole 1a during the manufacture of the bit 1, and in the case of spade or masonry drill bits, may be provided within the tungsten cutting part prior to that part being brazed in place. A hole may also be made in an existing drill bit with the use of a water jet cutter or plasma cutter. Preferably heat-producing cutting systems are avoided since high temperatures will reduce the hardness and life of the cutting edge of the original bit.

Where the item to be fed through the hole includes wire that can be bent over then that wire can be bent as a hook to attach it directly to the drill bit to be pulled through the hole by the drill bit as the drill is withdrawn. This arrangement is more efficient than the prior art since the hole 1 a is proximate the tip and elongate enabling easier assembly and reliable securing of the wire. This basic arrangement may be used for simpler jobs where the wall or other solid or semi-solid structure/ media is of dry, less obstructive materials such as wood and plasterboard.

For the more demanding jobs, including those that involve drilling through brick/ masonry/ stone walls it is generally preferred, and in some cases essential, to use the modified drill bit 1 together with a fishing adapter 2, as will now be described with reference to Figures 2 to 5.

As shown in Figure 2 the fishing adapter 2 comprises a body 2a having a hook-form drill bit connector 2b mounted to it at one end and having at the other end a threaded socket 2c as item connector into which an end of the cable C (or other linear item to be pulled through the drilled hole) is inserted and held. The body 2a may be made from robust plastics, metals or other suitable materials and, as shown in Figures 2 and 5A-C, is formed - eg cast or moulded - to be externally of generally circular cylindrical shape and of a diameter that is slimmer than the cutting end of the modified drill bit 1. Indeed, the overall design of the body 2a is so slim that it is generally barely wider than the cable C (or other linear item to be pulled through the drilled hole) and, therefore, does not necessitate the selection of a larger drill bit size (diameter) to be used to make the hole through the wall than would normally be used for the size of the cable C.

The body 2a is conical, overall as in Figure 2, or at least at its leading end (the end that attaches to the drill bit 1) as shown in Figures 5A - 5C in order to minimise resistance against debris when being pulled through the hole with the drill bit 1. The threaded socket 2c has an internal screw thread and tapers, narrowing towards the leading end of the body 2a and into this threaded socket 2c the leading end of cable C is pushed and twisted until tightly/ reasonably securely fitted. The use of an internal taper of the bore of the threaded socket 2c enables the body 2a to connect with wires/ cables C of a range of different diameters.

Conversely, referring to the variant form of the fishing adapter shown in Figure 5A, since most cables C are available in defined standard diameters, the body 2a can be manufactured to cater for a specific cable size and need not have a tapered bore. Example uses for the fishing adapter 2 include installation of coaxial television cable, satellite dish aerial cable and multi strand telephone flex, amongst others. Tasks such as telephone connection or satelite dish installation only involve one size of cable and thus it is possible to provide a dedicated size of body 2a/socket 2c with an untapered bore designed only for that specification of wire. This allows for closer tolerences in the drill size used relative to the cable diameter, ie the wall of the body 2a is thin throughout its length and thus the body 2a may have a diameter close to that of the cable C and drill bit diameter. Typically, this might be just 2mm resulting in a smaller drill hole and less overall damage to the wall/ material being drilled.

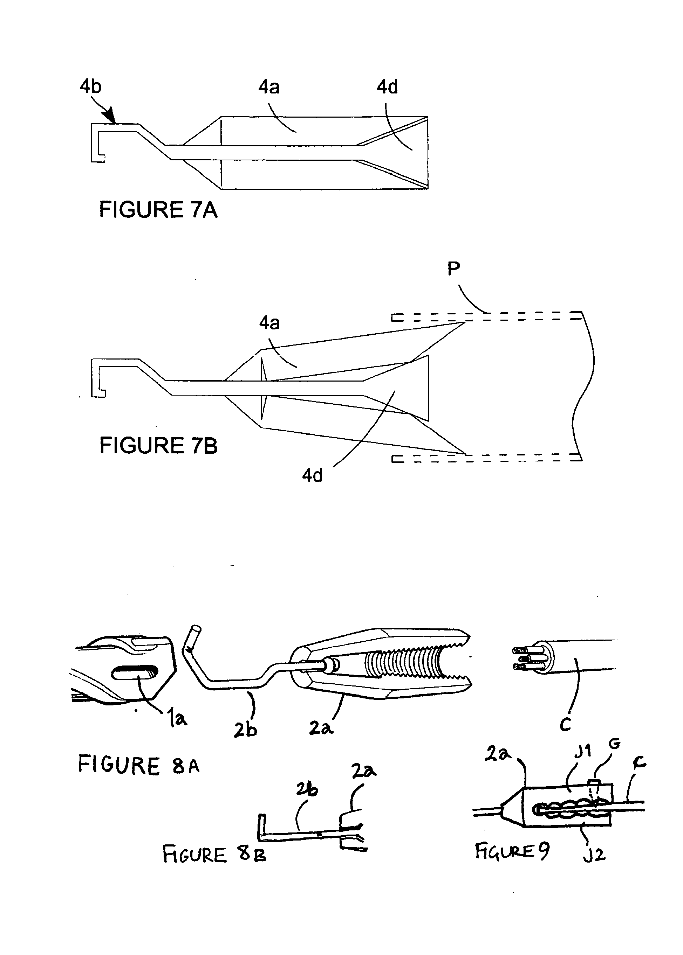

The fishing adapter 2 may, if desired, be configured to install flexible elongate items other than wire and cabling such as, for example, piping and electrical conduits. An arrangement suitable for these latter applications is shown in Figures 7A and 7B as will be described in further detail later.

For most embodiments the fishing adapter 2 may be reused if undamaged. In the variant shown in Figure 5B, however, the fishing adapter 2 is designed as a disposable item. It has a spring loaded catch in the form of reverse-angled resilient fingers 3 to act as a non return grip. This is quicker and easier to use when a cable C or wire is inserted. The cable or wire would be cut free from the fishing adapter 2 after positioning and the latter thrown away. A benefit of this design is that a manufacturer or distributer will have a constant source of income from the need of the user to stock replacement parts. Again, a selection of sizes may be manufactured to match diferent drill sizes and types of vaying diameters of wire and cable.

In all illustrated embodiments of the invention the leading end of the body 2a has the drill bit connector 2b hook rotatably mounted to the body 2a by a simple thrust bearing mount comprising a smooth ball-shaped head 2d and corresponding low friction seat 2e at the leading end of a cavity (eg the socket 2c) in the body 2a. This uniquely allows the body 2a and the drill bit connector 2b to rotate relative to each other. The body 2a thus generally need not revolve when the drill bit 1 is powered to slowly rotate for ease of withdrawal and hence the cable C attached to the body 2a will not rotate either despite the turning of the drill bit 1.

Provided that the distance between the drill bit 1 and the adaptor body 2a is small, there is little chance of any debris falling between the two parts and impeding the progress of the drill bit 1 and attached cable C. To reduce the gap between the drill bit 1 and the adaptor body 2a to the absolute minimum possible, the hook 2b is suitably formed in situ from a wire element that is already mounted in the fishing adapter body 2a.

Figure 6 illustrates an example simple jig assembly suitable for post-forming the hook 2b on a short protruding straight length of metal wire W the other end of which wire W has the thrust bearing head 2d that is rotatably pre-anchored in the fishing adapter body 2a. The jig is hereshown as comprising three moving blocks J1, J2 and J3 that operate successively to push the short wire length W against a static block J4 and each other to bend the wire W into the required hook shape. The first block J1 in a first move pushes the wire W against static block J4 to form two bends in the wire W and then the second moving block J2 pushes the wire W down onto J1 to form a flat top to the hook 2b, followed by the third moving block J3 pushing the wire W again down onto J1 at a rear shoulder of J1 to form the return to the hook 2b. Since the wire W is suitably a relatively inflexible wire, eg of 1 to 2mm thick steel wire, it is not readily bendable by hand and will generally not unbend on loading in use when being pulled through an obstruction. A machine tool such as the jig assembly is needed to bend the wire into the hook form.

As a further aid to securely hold the hook to the bit under load a refinement of the hook configuration is suitably made comprising an out-of-plane bend to the end of the hook. This is most clearly shown in Figures 8A and 8B. When drilling through a porous material it may help the drilling process if the rotating bit is moved both backwards as well as forwards in order that the porous material is cleared away from the path of the bit it helps that the hook has a flat end section, as in Figures 4 and 7A-B, 8A-B which permits the movement of the drill bit in both directions without the hook becoming disconnected. Then, by making the distal end of the hook have a final turn to be substantially orthogonal to the plane of the hook, the hook may also act as a key whereby, when the hook is introduced into the slot in the bit at right angles to the working axis, it will become 'locked' in place when the axis of the device is aligned with the drill bit.

The fishing adapter of the present invention has been found to work very well in practice. For example, it has been used to pull coaxial TV cable through holes drilled through 300mm thick rubble filled stone walls. Normally, this has been a very difficult task since the rubble tends to collapse within the tunnel like hole when the drill bit 1 is withdrawn. However, using the system of the present invention solves the problem. In each case a 400mm x 10mm masonry drill bit 1 with tungsten tip modified to have the elongate hole 1a was drilled through the wall to reach the exterior and a fishing adapter of the invention was hooked to the hole 1a of the drill bit 1 and used to pull the cable C through the hole, while powering the drill to rotate to ease withdrawal. The system performed perfectly each time enabling the TV cable to be installed in just a few minutes.

Using the fishing adapter of the present invention the drill may be powered to rotate at moderate speed as it is withdrawn to clear debris. Should the operator or his/her employer consider that Health and Safety regulations demand that the drill be switched off before it is withdrawn, then the SDS chuck or standard chuck may be opened to release the bit and the electric-powered drill then replaced by a hand drill to turn the drill bit slowly to withdraw it. The drill bit used may suitably be a tungsten tipped masonry bit used with a percussion drill, a double helix twist drill, a standard jobber drill, a carpenter's flat wood drill bit, an auger drill bit or a spade drill bit as used with glass and tiles and most tools designed to create a hole in a material.

Referring to Figures 7A and 7B, instead of being use for installing wire or cables C, the fishing adapter may be adapted for installing piping P or electrical conduits or the like Here the body has a form that is adapted to splay in the manner of a cavity anchor or rawl-plug to lock the body in the bore of the piping/ conduit, as shown in Figure 7B. This modified fishing adapter 4 has a hook 4b like the cable-carrying fishing adapter 2 that allows it to be hooked onto the drill bit 1 that projects through the wall. However, the item-connector part of the body 4a is different. A wedge/conical shaped head 4d is provided at the thrust bearing mount of the hook 4b to the adapter body 4a. The body 4a is split and adapted to splay radially outwardly in the manner of a cavity anchor or rawl-plug when the hook 4b is pulled on and turned whereupon the wedge/ conical shaped head 4d acts to cam the body 4a to the splayed state, causing the splayed body 4a to dig into the bore of the pipe P to hold the pipe P to the adapter.

The tubular body 4a has a thin wall and the pipe P is held closely within it and this enables the system to be used with the slimmest possible drill bit - being only slightly larger than the pipe P being drawn through the masonry wall which results in the work needed to repair the damage produced by the drilling process being minimised.

As a further refinement to the system, a sealing/ closure washer may be provided on the cable or pipe. The washer may be placed over the wire or pipe and then slipped along the wire or pipe until the wall is reached to remain there to stop the ingress of water and insects while adding a neat appearence to the finished task.

A further variant that enables the connection of plastic water pipe, copper water pipe and flexible conduit may comprise a body with a tapered external thread onto which pipe and conduit may be attached by a simple turning action. An additional benefit of such an attachment is that the body of the device effectively closes the pipe / conduit tube end which stops any debris entering as the pipe is pulled through the wall.

In the UK flat twin and earth cables are far more common than in Europe, where round cabling is normal. It follows that there is a need for a simple grip to meet the needs of electricians in Britain to grip flat twin and earth cables. Referring to Figure 9, a fishing adapter body 2a having a grip/ item connector comprising a pair of toothed/serrated jaws J1, J2 may be readily configured to take flat cables up to 11 mm x 6mm. The cable C may be slid sideways into place and suitably be secured in the jaws J1, J2 of such adapter body 2a using a pair of grub screws G or the like, one extending through each jaw J1, J2 to pin the cable C in place.

## Claims

1. A fishing adapter that comprises a drill bit connector that is demountably attached to a masonry drill bit in use and an item connector to enable a cable or other elongate/ linear item to be attached to the adapter, wherein the adapter has a rotary coupling between the drill bit connector and the item connector to permit the drill bit to rotate as the adapter with cable or other elongate/ linear item attached is pulled through a drilled hole without significantly twisting said cable or other elongate/linear item, the fishing adapter comprising a tubular body having the drill bit connector anchored therein and projecting therefrom at one end of the body and the item connector at the other end and with the rotary coupling therebetween, the drill bit connector comprising a hook that engages in use with a notch or hole in the masonry drill bit, the notch or hole being proximate the tip end of the drill bit.

2. A fishing adapter as claimed in claim 1, wherein the rotary coupling has a bearing surface of nylon or other robust low friction or self-lubricating material.

3. A fishing adapter as claimed in claim 1 or 2 in combination with a drill bit that has a through hole in the drill bit, wherein the hole in the drill bit is elliptical, rectangular or otherwise elongate in the axial direction of the drill bit whereby the hook on the adapter may be easily and reliably secured to the drill bit by insertion into the hole from one side and turning the hook until the stem/ shank of the hook is substantially oriented in the axial direction of the drill bit.

4. A fishing adapter as claimed in claim 3, wherein the drill bit connector has an anchoring means comprising a bead or broadened tail end of the drill bit connector that serves to anchor the drill bit connector in the fishing adapter body.

5. A fishing adapter as claimed in claim 4, wherein the drill bit connector anchoring means has a rounded surface to engage the bearing surface of the fishing adapter body.

6. A fishing adapter as claimed in claim 4 or 5, wherein the bearing surface is of nylon or other robust low friction or self-lubricating material and the drill bit connector comprises a length of wire, the anchoring means comprising a loop of the wire or flattened and spread part of the wire.

7. A fishing adapter as claimed in any preceding claim, wherein the item connector comprises a socket at one end of the fishing adapter tubular body.

8. A fishing adapter as claimed in claim 6 or 7, wherein the item connector is a threaded socket or serrated jaws.

9. A fishing adapter as claimed in claim 7, suited to use for a defined diameter of wire or cable wherein the threaded socket is formed in the body and is parallel-sided/un-tapered and the body too is generally circular cylindrical in external form and thin walled to present a slim profile.

10. A fishing adapter as claimed in claim 9, suited to use for varying diameters of wire or cable wherein the threaded socket is formed in the body and is tapered narrowing towards the drill bit connector end of the body.

11. A fishing adapter as claimed in claim 7, wherein the socket is formed in the body and has internal inward facing flexible strips or fingers positioned to create a one way locking grip.

12. A fishing adapter as claimed in claim 1, wherein the body is adapted to grip the interior of a pipe or conduit by having an external thread therearound or by being configured to splay when prised apart by a wedge that is pulled by the hook.

13. A fishing adapter as claimed in any preceding claim, wherein the hook is formed in situ from a wire element that is anchored in the fishing adapter body and bent into shape by a jig assembly.

14. A fishing adapter as claimed in any preceding claim, wherein the hook is formed with a leading end that is flattened to facilitate motion of the drill bit back and forth in the drilled opening without disengaging.

15. A fishing adapter as claimed in any preceding claim, wherein the hook is formed with a distal end that is bent substantially orthogonal to the general plane of the hook whereby the hook must be introduced into the slot in the bit with the axis of the adapter body substantially at right angles to the axis of the bit so that they will not disengage in use when the axis of the adapter body is aligned with the axis of the drill bit.
